# EUROPEAN PATENT APPLICATION

(11) **EP 2 871 791 A1**
(43) Date of publication of application: **13.05.2015**
(21) Application number: 12880309.5
(22) Date of filing: 05.07.2012
(51) Int. Cl.: H04J 14/08

(54) **METHOD, DEVICE AND SYSTEM FOR PROCESSING SERVICE OVERHEAD**

(71) Applicant: ZTE Corporation, Shenzhen, Guangdong 518057 (CN)
(72) Inventor: LIN, Haidu, Shenzhen Guangdong 518057 (CN); WANG, Xueping, Shenzhen Guangdong 518057 (CN); WANG, Tong, Shenzhen Guangdong 518057 (CN)
(74) Representative: Deambrogi, Edgardo
(86) International application number: PCT/CN2012/078246
(87) International publication number: WO 2014/005315

(57) **Abstract**

Disclosed are a method, device and system for processing service overheads. The method comprises: multi-channel services are multiplexed into a single-channel time division service according to a preset rule; overheads at specific locations of the multiplexed multi-channel services are serially extracted from the single-channel time division service; and according to the network monitoring information indicated by the overheads at the specific locations, a corresponding overhead processing is performed. The present invention is applied to solve the problem in the related art that a large amount of resources are occupied by parallel processing of overheads, thereby saving resources, simplifying the overhead processing device, and increasing the versatility of the processing system.

## Description

### Technical Field

The present invention relates to the field of communications, and in particular to a method, device and system for processing service overhead.

### Background

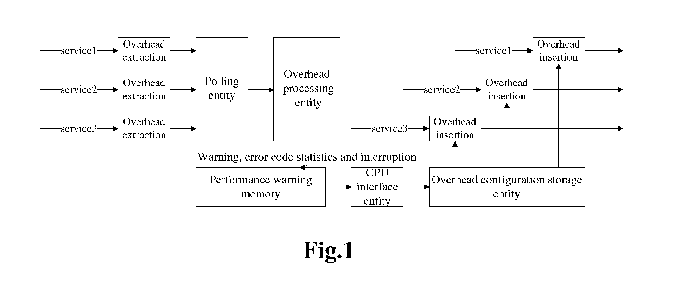

Currently, the extraction and insertion of overheads of multi-channel services both adopt the parallel manner. Fig. 1 is a schematic diagram of a system for processing service overhead according to the related art. As shown in Fig. 1, in the related art, the parallel extraction and parallel insertion method of overheads is adopted.

With the enlargement of network capacity and the increase of services, the defects of using the parallel extraction and parallel insertion manner of overheads are more and more obvious, and that is each service needs a set of separate circuit to complete the extraction and insertion of the overheads and occupies great resources. In addition, as regards the service which only has overheads at specific locations of a frame structure, great bandwidths are obviously wasted.

In view of the problem in the related art that a large amount of resources are occupied by parallel processing of overheads, no effective solution has been proposed so far.

### Summary

The present invention provides a solution for processing service overheads so as to at least solve the above-mentioned problem in the related art that a large amount of resources are occupied by parallel processing of overheads.

According to one aspect of the present invention, a method for extracting service overheads is provided, which comprises: multiplexing multi-channel services into a single-channel time division service according to a preset rule; serially extracting overheads at specific locations of the multiplexed multi-channel services from the single-channel time division service; and according to network monitoring information indicated by the overheads at the specific locations, performing a corresponding overhead processing.

Preferably, multiplexing the multi-channel services into the single-channel time division service according to the preset rule comprises: allocating the multi-channel services to at least one corresponding time slot of a bus to form the single-channel time division service according to a service speed ratio.

Preferably, before multiplexing the multi-channel services into the single-channel time division service according to the preset rule, the method further comprises: caching the multi-channel services via a First Input First Output (FIFO).

Preferably, the network monitoring information comprises at least one of the following: warning information, statistical information about performance error code and interruption information.

According to another aspect of the present invention, a method for inserting service overheads is provided, which comprises: acquiring overhead configuration information and overhead information for network monitoring; according to the overhead configuration information and a type of a time division service preproccessed currently, inserting the overhead information into bytes of frame structures corresponding to the time division service; and demultiplexing the time division service inserted with the overhead information to obtain multi-channel services.

Preferably, the overhead information comprises at least one of the following: warning information, statistical information about performance error code and interruption information.

According to another aspect of the present invention, a device for extracting service overheads is provided, which comprises: a multiplexing entity configured to multiplex multi-channel services into a single-channel time division service according to a preset rule; an extraction entity configured to serially extract overheads at specific locations of the multiplexed multi-channel service from the single-channel time division service; and a processing entity configured to, according to network monitoring information indicated by the overheads at the specific locations, perform a corresponding overhead processing.

Preferably, the multiplexing entity is further configured to allocate the multi-channel services to at least one corresponding time slot of a bus to form the single-channel time division service according to a service speed ratio.

Preferably, the device further comprises: a storage entity configured to cache the multi-channel services via an FIFO.

According to another aspect of the present invention, a device for inserting service overheads is provided, which comprises: an acquisition entity configured to acquire overhead configuration information and overhead information for network monitoring; an insertion entity configured to, according to the overhead configuration information and a type of a time division service preproccessed currently, insert the overhead information into bytes of frame structures corresponding to the time division service; and a demultiplexing entity configured to demultiplex the time division service inserted with the overhead information to obtain multi-channel services.

According to a further aspect of the present invention, a system for processing service overheads is provided, comprising the above-mentioned device for extracting service overheads and the above-mentioned devices for inserting service overheads.

By means of the present invention, the manner of processing overheads of a serialized time division service is applied to solve the problem in the related art that a large amount of resources are occupied by parallel processing of overheads, thereby saving resources, simplifying the overhead processing device, and increasing the versatility of the processing system.

### Brief Description of the Drawings

Drawings, provided for further understanding of the present invention and forming a part of the specification, are used to explain the present invention together with embodiments of the present invention rather than to limit the present invention. In the drawings:
Fig. 1 is a schematic diagram of a system for processing service overheads according to the related art;
Fig. 2 is a flowchart of a method for extracting service overheads according to an embodiment of the present invention;
Fig. 3 is a flowchart of a method for inserting service overheads according to an embodiment of the present invention;
Fig. 4 is a structure diagram of a device for extracting service overheads according to an embodiment of the present invention;
Fig. 5 is a structure diagram of a device for extracting service overheads according to a preferred embodiment of the present invention;
Fig. 6 is a structure diagram of a device for inserting service overheads according to an embodiment of the present invention;
Fig. 7 is a structure diagram of a system for processing service overheads according to an embodiment of the present invention;
Fig. 8 is a schematic diagram of a system for processing service overheads according to embodiment 1 of the present invention;
Fig. 9 is a schematic diagram of an implementation circuit of a service multiplexing entity according to embodiment 2 of the present invention;
Fig. 10 is a schematic diagram of an implementation circuit of a service demultiplexing entity according to embodiment 2 of the present invention;
Fig. 11 is a schematic diagram of an implementation circuit of an overhead extraction parsing entity according to embodiment 2 of the present invention; and
Fig. 12 is a schematic diagram of an implementation circuit of an overhead insertion entity according to embodiment 2 of the present invention.

### Detailed Description of the Embodiments

The present invention is described below with reference to the accompanying drawings and embodiments in detail. Note that, the embodiments of the present application and the features of the embodiments can be combined with each other if there is no conflict.

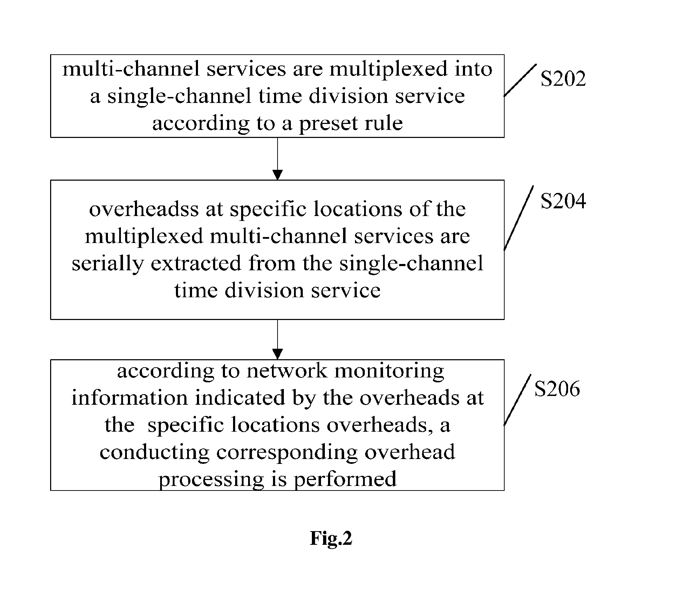

According to an embodiment of the present invention, a method for extracting service overheads is provided. Fig. 2 is a flowchart of a method for extracting service overheads according to an embodiment of the present invention. As shown in Fig. 2, the extraction method comprises the following steps:
step S202, multi-channel services are multiplexed into a single-channel time division service according to a preset rule;
step S204, overheads at specific locations of the multiplexed multi-channel services are serially extracted from the single-channel time division service; and
step S206, according to network monitoring information indicated by the overheads at the specific locations, a corresponding overhead processing is performed.

By means of the embodiments of the present invention, the manner of serializing parallel services and then extracting overheads is applied to solve the problem in the related art that a large amount of resources are occupied by parallel processing of overheads, thereby saving resources, simplifying the overhead processing device, and increasing the versatility of the processing system.

In the step S202, the multi-channel services may be respectively allocated to at least one corresponding time slot of a bus to form the single-channel time division service according to a service speed ratio.

Before the step S202, the above-mentioned multi-channel service may be cached via an FIFO. The FIFO is a buffer.

In the implementation process, the network monitoring information indicated by the overheads at the specific locations in the step S204 comprises at least one of the following: warning information, statistical information about performance error code and interruption information. The method is simple and useful and strong in operability.

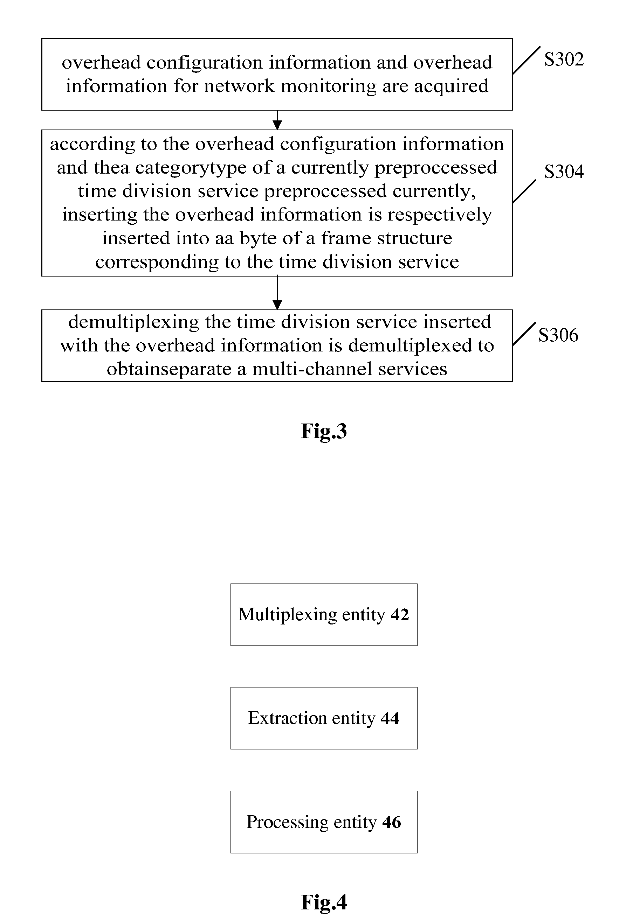

Similarly, the embodiment of the present invention further provides a method for inserting service overheads. Fig. 3 is a flowchart of a method for inserting service overheads according to an embodiment of the present invention. As shown in Fig. 3, the method comprises the following steps:
step S302, overhead configuration information and overhead information for network monitoring are acquired;
step S304, according to the overhead configuration information and a type of a time division service preproccessed currently, the overhead information is respectively inserted into a byte of a frame structure corresponding to the time division service; and
step S306, the time division service inserted with the overhead information is demultiplexed to obtain multi-channel services.

By means of the embodiment of the present invention, the manner of inserting overheads for a serial time division service and then separating multi-channel services is applied to solve the problem in the related art that a large amount of resources are occupied by parallel processing of overheads, thereby saving resources, simplifying the overhead processing device, and increasing the versatility of the processing system.

In the implementation process, the overhead information in step S302 comprises at least one of the following: warning information, statistical information about performance error code and interruption information.

Corresponding to the extraction method above, an embodiment of the present invention also provides a device for extracting service overheads. Fig. 4 is a structure diagram of a device for extracting service overheads according to an embodiment of the present invention. As shown in Fig. 4, the extraction device **40** comprises: a multiplexing entity **42** configured to multiplex multi-channel services into a single-channel time division service according to a preset rule; an extraction entity **44** coupled to the multiplexing entity **42** and configured to serially extract overheads at specific locations of the multi-channel services multiplexed by the multiplexing entity **42** from the single-channel time division service; and a processing entity **46** configured to, according to network monitoring information indicated by the overheads at the specific locations, perform a corresponding overhead processing.

By means of the above-mentioned device, after the multiplexing entity **42** serializes parallel services, and then the extraction entity **44** extracts overheads to be processed by the processing entity **46**, solving the problem in the related art that a large amount of resources are occupied by parallel processing of overheads, saving resources, simplifying the overhead processing device, and increasing the versatility of the processing system.

Preferably, the multiplexing entity **42** is further configured to respectively allocate the multi-channel services to at least one corresponding time slot of a bus to form the single-channel time division service according to a service speed ratio.

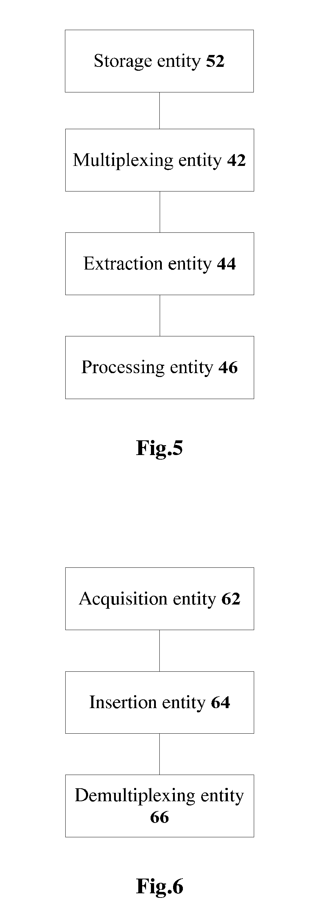

Fig. 5 is a structure diagram of a device for extracting service overheads according to a preferred embodiment of the present invention. As shown in Fig. 5, the extraction device **40** further comprises: a storage entity **52** configured to cache the multi-channel services via an FIFO.

Corresponding to the insertion method above, an embodiment of the present invention also provides a device for inserting service overheads. Fig. 6 is a structure diagram of a device for inserting service overheads according to an embodiment of the present invention. As shown in Fig. 6, this insertion device **60** comprises: an acquisition entity **62** configured to acquire overhead configuration information and overhead information for network monitoring; an insertion entity **64** coupled to the acquisition entity **62** and configured to, according to the overhead configuration information and a type of a time division service preproccessed currently, respectively insert the overhead information into bytes of frame structures corresponding to the single-channel time division service; and a demultiplexing entity **66** coupled to the insertion entity **64** and configured to demultiplex the time division service inserted with the overhead information to isolate the multi-channel services.

By means of the above-mentioned device, after the insertion entity **64** inserts overheads for the serial time division service, the demultiplexing entity **66** isolates the multi-channel services, solving the problem in the related art that a large amount of resources are occupied by parallel processing of overheads, saving resources, simplifying the overhead processing device, and increasing the versatility of the processing system.

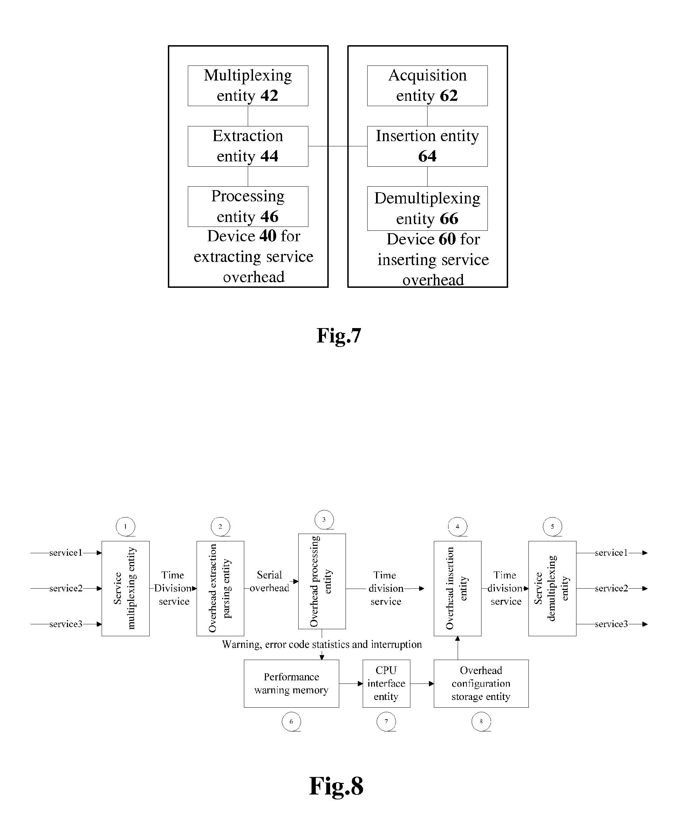

In addition, an embodiment of the present invention further provides a system for processing service overhead. Fig. 7 is a structure diagram of a system for processing service overheads according to an embodiment of the present invention. As shown in Fig. 7, the system comprises the above-mentioned device **40** for extracting service overheads and the above-mentioned device **60** for inserting service overheads.

The implementation process of the above-mentioned embodiments is described in details with reference to the preferred embodiments and the accompanying drawings below.

### Embodiment 1

In view of the situation that the overhead processing manner in the related art has the problems of occupation of great resources, low utilization rate of bandwidths and complicated design, the present embodiment provides an overhead extraction and insertion method using time division multiplex. The embodiment uses the manner of serially extracting and inserting overheads so that only a set of insertion and extraction circuit is required by multi-channel services, which can save resources, increase the utilization rate of bandwidths and enhance the versatility and transportability of the circuit.

Fig. 8 is a schematic diagram of a system for processing service overhead according to embodiment 1 of the present invention. As shown in Fig. 8, the processing system comprises a device for extracting overheads and a device for inserting overheads. The processing system comprises: a service multiplexing entity ①, an overhead time sharing extraction entity ②, an overhead time sharing processing entity ③, an overhead time sharing insertion entity ④, a service demultiplexing entity ⑤, a performance warning memory ⑥, a CPU interface entity ⑦ and an overhead configuration storage entity ⑧. The function of each entity is described simply below.
1) The entity ① slices up time for a bus. For example, the time is divided into 80 time slots, and then each service is allocated to at least one time slot of the bus according to a service speed ratio. For instance, an ODU4 service fills all the 80 time slots, an ODU0 only occupies one of the 80 time slots, an ODU1 occupies two time slots, an ODU2 occupies eight time slots, an ODU3 occupies 32 time slots, and an ODUflex may occupy 0-80 time slots, etc. An ODUk is optical channel data unit of OTN.
2) The entity ② serially extracts an overhead at a specific location of each multiplexed service. As regards n-channel services, only a set of extraction circuit is needed rather than n sets of extraction circuits.
3) The entity ③ mainly serially processes the extracted overheads, which may comprise warning, interruption and performance error code statistics of a near-end and a far-end, and transmits same to the entity ⑥.
4) The entity ④ inserts an overhead extracted from the entity ⑧ into a specific location of each frame as regards a serial data stream flowing into the entity ④.
5) The entity ⑤ is a demultiplexing entity and process a single-channel service after multiplexing and time division to obtain parallel services.
6) The entity ⑥ is configured to store information such as warning information, interruption information and performance information, and transmits same to the CPU interface entity ⑦ via an interface.
7) The entity ⑦ is mainly an interface for information communication between a user and a chip. On one hand, the user transmits configuration information to the overhead configuration storage entity ⑧ via the CPU interface entity, and on the other hand, relevant information such as warning information, interruption information and information about performance error code is acquired from the interface.
8) The entity ⑧ is mainly for storing overhead information from the CPU interface.

Hence, by means of using the above-mentioned overhead processing system of the present embodiment, resources are saved, and especially, with the enlargement of bandwidths and the increase of services, the effect is more and more obvious. In addition, the versatility of entities is improved and overhead extraction and insertion entities may be generally used after simple modification as the increase of the services.

### Embodiment 2

The present embodiment describes the implementation manner of a multiplexing circuit, a demultiplexing circuit, an extraction circuit and an insertion circuit used in the above-mentioned embodiment 1 in detail.

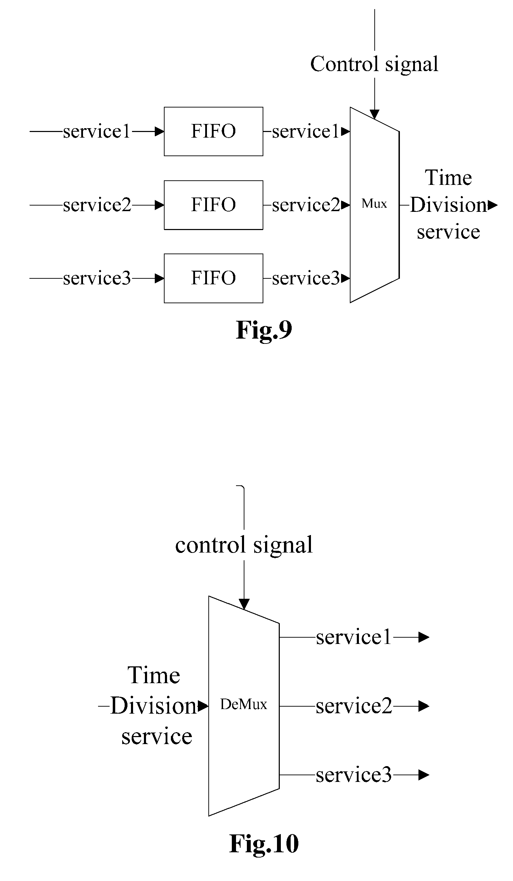

Fig. 9 is a schematic diagram of an implementation circuit of a service multiplexing entity according to embodiment 2 of the present invention. As shown in Fig. 9, in the implementation circuit of the service multiplexing entity, firstly, the incoming services may be cached via an FIFO, and then data is taken from the corresponding FIFO and is placed on the corresponding time slot according to a control signal (the control signal mainly shows what kind of service is allocated to which time slot of a bus).

Fig. 10 is a schematic diagram of an implementation circuit of a service demultiplexing entity according to embodiment 2 of the present invention. As shown in Fig. 10, contrary to the implementation circuit of the service multiplexing entity, in the implementation circuit of the service demultiplexing entity, the demultiplexing is equivalent to using a decoder circuit. That is, according to a control signal, respective services are separated from a time division service, and there is no need to use an FIFO to cache here, which is different from the multiplexing.

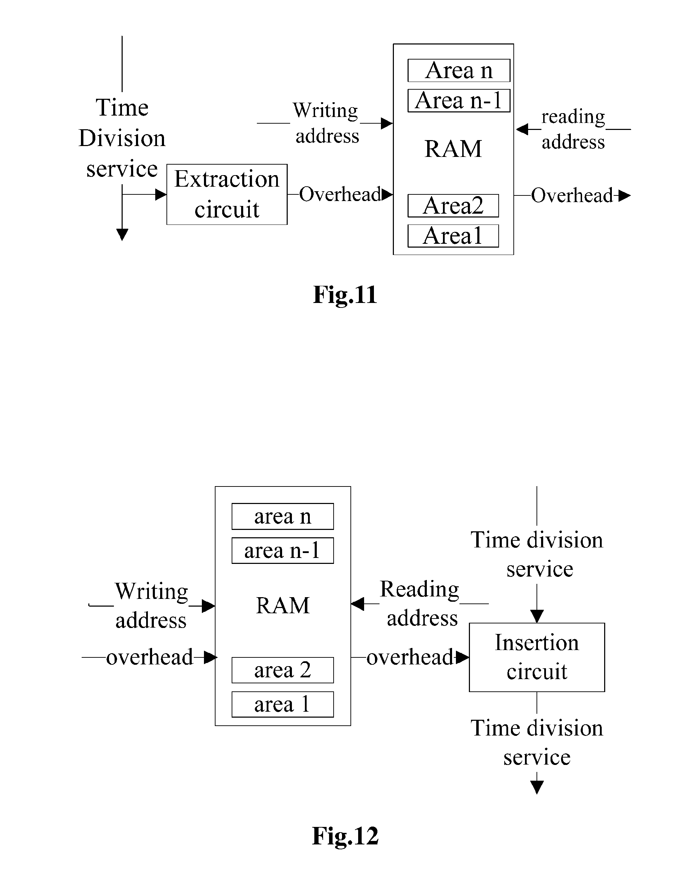

Fig. 11 is a schematic diagram of an implementation circuit of an overhead extraction parsing entity according to embodiment 2 of the present invention. As shown in Fig. 11, the extraction circuit in the figure extracts an overhead byte at a specific frame structure location from a time division service, and then writes same into the corresponding area of a random access memory (referred to as RAM) according to the service type (which is classified according to the speed) at the moment. A reading side of the RAM firstly checks whether there are overheads to be processed in a high-speed area; if yes, the overheads are taken out and sent to an overhead time sharing processing entity; if not, a low-speed area is searched until all the areas are searched; and if the overheads are still not found, a reading operation is not performed.

Fig. 12 is a schematic diagram of an implementation circuit of an overhead insertion entity according to embodiment 2 of the present invention. As shown in Fig. 12, a CPU interface entity firstly stores overheads in each area of a RAM according to service types, then a reading side reads pre-configured overheads from the corresponding RAM area according to a service type of a current time division service, and the overheads are respectively inserted into a byte of a specific structure of a frame structure via an insertion circuit.

In summary, the embodiments of the present invention relate to a device for processing overheads of multi-channel services in an optical transport network. In the embodiments of the present invention, extracting and inserting overheads are performed on a serialized time division service, thus saving resources, simplifying the overhead processing device, and increasing the versatility of the processing system.

Obviously, those skilled in the art shall understand that the above-mentioned entities and steps of the present invention can be realized by using general purpose calculating device, can be integrated in one calculating device or distributed on a network which consists of a plurality of calculating devices. Alternatively, the entities and the steps of the present invention can be realized by using the executable program code of the calculating device. Consequently, they can be stored in the storing device and executed by the calculating device, or they are made into integrated circuit entity respectively, or a plurality of entities or steps thereof are made into one integrated circuit entity. In this way, the present invention is not restricted to any particular hardware and software combination.

The descriptions above are only the preferable embodiment of the present invention, which are not used to restrict the present invention, for those skilled in the art, the present invention may have various changes and variations. Any amendments, equivalent substitutions, improvements, etc. within the principle of the present invention are all included in the scope of the protection of the present invention.

## Claims

1. A method for extracting service overheads, **characterized by** comprising:
multiplexing multi-channel services into a single-channel time division service according to a preset rule;
serially extracting overheads at specific locations of the multiplexed multi-channel services from the single-channel time division service; and
according to network monitoring information indicated by the overheads at the specific locations, performing a corresponding overhead processing.

2. The method according to claim 1, **characterized in that** multiplexing the multi-channel services into the single-channel time division service according to the preset rule comprises:
allocating the multi-channel services to at least one corresponding time slot of a bus to form the single-channel time division service according to a service speed ratio.

3. The method according to claim 1, **characterized in that** before multiplexing the multi-channel services into the single-channel time division service according to the preset rule, the method further comprises:
caching the multi-channel services via an First Input First Output (FIFO).

4. The method according to any one of claims 1 to 3, **characterized in that** the network monitoring information comprises at least one of the following: warning information, statistical information about performance error code and interruption information.

5. A method for inserting service overheads, **characterized by** comprising:
acquiring overhead configuration information and overhead information for network monitoring;
according to the overhead configuration information and a type of a time division service preproccessed currently, inserting the overhead information into bytes of frame structures corresponding to the time division service; and
demultiplexing the time division service inserted with the overhead information to obtain multi-channel services.

6. The method according to claim 5, **characterized in that** the overhead information comprises at least one of the following: warning information, statistical information about performance error code and interruption information.

7. A device for extracting service overheads, **characterized by** comprising:
a multiplexing entity configured to multiplex multi-channel services into a single-channel time division service according to a preset rule;
an extraction entity configured to serially extract overheads at specific locations of the multiplexed multi-channel service from the single-channel time division service; and
a processing entity configured to, according to network monitoring information indicated by the overheads at the specific locations, perform a corresponding overhead processing.

8. The device according to claim 7, **characterized in that** the multiplexing entity is further configured to allocate the multi-channel services to at least one corresponding time slot of a bus to form the single-channel time division service according to a service speed ratio.

9. The device according to claim 7, **characterized in that** the device further comprises:
a storage entity configured to cache the multi-channel services via an FIFO.

10. A device for inserting service overheads, **characterized by** comprising:
an acquisition entity configured to acquire overhead configuration information and overhead information for network monitoring;
an insertion entity configured to, according to the overhead configuration information and a type of a time division service preproccessed currently, insert the overhead information into bytes of frame structures corresponding to the time division service; and
a demultiplexing entity configured to demultiplex the time division service inserted with the overhead information to obtain multi-channel services.

11. A system for processing service overhead, **characterized by** comprising the device for extracting the service overheads in any one of claims 7 to 9 and the device for inserting the service overheads in claim 10.
